# EUROPÄISCHE PATENTSCHRIFT

(11) **EP 2 958 774 B1**
(45) Veröffentlichungstag und Bekanntmachung des Hinweises auf die Patenterteilung: **27.03.2019**
(21) Anmeldenummer: 14753471.3
(22) Anmeldetag: 04.02.2014
(51) Int. Cl.: B60R 19/26, B60R 19/34, F16F 7/12

(54) **AUFPRALLABSORPTIONSELEMENT**
IMPACT ABSORBING ELEMENT
ÉLÉMENT AMORTISSEUR POUR COLLISION

(30) Priorität: 19.02.2013 DE 102013202607
(43) Veröffentlichungstag der Anmeldung: 30.12.2015
(73) Patentinhaber: Magna International Inc., Aurora, ON L4G 7K1 (CA)
(72) Erfinder: KELLER, Roland, 97904 Dorfprozelten (DE); SHIVPANOR, Satish, 63739 Aschaffenburg (DE)
(74) Vertreter: Glawe, Delfs, Moll
(86) Internationale Anmeldenummer: PCT/IB2014/000381
(87) Internationale Veröffentlichungsnummer: WO 2014/128560

(56) Entgegenhaltungen:
- EP-A1- 1 640 147
- WO-A1-2012/040826
- JP-A- 2008 296 716
- US-B1- 6 969 548
- US-B2- 7 694 787
- US-B2- 8 287 013
- US-B2- 8 297 668

## Beschreibung

Die Erfindung geht aus von einem Aufprallabsorptionselement aus einem röhrenförmigen Körper zur Aufnahme der Aufprallenergie in einem Fahrzeug, wobei das Aufprallabsorptionselement einen doppelwabenförmigen Querschnitt aufweist.

### Stand der Technik

Stossfänger werden quer an Front und Heck eines Kraftfahrzeugs zwischen der die Karosserie abschliessenden Kunststoffverschalung und dem Rahmen des Kraftfahrzeugs angeordnet. Um Beschädigungen der Fahrzeugstruktur bei Front- oder Heckaufprällen mit geringen Geschwindigkeiten zu vermeiden, werden Deformationselemente, Aufprallabsorptionselemente, integriert. Aufprallabsorptionselement sind dünnwandige, in der Regel rechteckige Elemente aus Stahl, Aluminium oder Kunststoff. Sie können durch Fügen aus gepressten Blechschalen oder einteilig, beispielsweise als extrudiertes Aluminiumprofil, hergestellt sein.

Angeordnet zwischen Fahrzeuglängsträger und dem Stossfängerquerträger absorbieren die Aufprallabsorptionselement die aus einem Anprall resultierende kinetische Energie, indem diese in Verformungsarbeit umgewandelt wird. Hierdurch soll vermieden werden, dass der Längsträger bleibend beschädigt wird, wenn ein kritisches Lastniveau überschritten wird. Die Aufprallabsorptionselemente sind dabei typischerweise an die Fahrzeugstruktur und deren Notwendigkeiten angepasst. Weiterhin müssen die Aufprallabsorptionselemente den unterschiedlichen Forderungen der gesetzlichen Regulierungen, sowie der unterschiedlichen Fahrzeuggewichte und der Härte der Materialien gerecht werden. Die Aufprallabsorptionselemente werden daher fahrzeugtypisch erstellt. Wünschenswert ist dabei, dass Aufprallabsorptionselemente möglichst viel Energie aufnehmen können, gleichzeitig aber nicht allzu viel Zusatzgewicht für das Fahrzeug darstellen.

Aus dem Stand der Technik sind Aufprallabsorptionselemente bekannt. Die WO2012040826 A1 beschreibt ein skalierbares Aufprallabsorptionselement, dessen Querschnitt aus einem 10-flächigen Polygon besteht. Das beschriebene Aufprallabsorptionselement ist dabei symmetrisch um eine Mittelachse aufgebaut. Dabei werden hauptsächlich sternförmige Ausführungen beschrieben. Dieses entlang einer Kreislinie geführte 10-flächigen Polygon ermöglicht eine gewisse Verbesserung gegenüber den bisher gebräuchlichen Aufprallabsorptionselementen mit rechteckigen Querschnitt. Ein Absorptionselement mit denen aus dem Oberbegriff des Anspruchs 1 bekannten Merkmalen ist aus der JP 2008 296716 A bekannt.

Die Aufgabe der Erfindung ist es, Aufprallabsorptionselemente vorzustellen, deren Funktionalität gegenüber den im Stand der Technik bekannten Aufprallabsorptionselementen bei gleichem Gewicht verbessert ist.

Diese Aufgabe wird gelöst mit den mit den Merkmalen des Kennzeichens des Anspruchs 1. Bevorzugte Ausführungen bilden den Gegenstand der Unteransprüche.

Aus herstellungstechnischen Gründen ist es gegeben, dass die Radien der Einschnürung sowie der Wabenspitzen mindesten der Dicke des Mantelmaterials des Aufprallabsorptionselements entsprechen.

Für alle genannten Ausführungsformen ist es besonders wichtig, dass keine Vorkehrungen oder Ausschnitte vorzusehen sind, damit das Aufprallabsorptionselement an diesen Stellen einknicken und sich falten kann. Durch seine Doppelwabenstruktur ist es möglich, dass das Aufprallabsorptionselement ohne zusätzliche Falthilfen ein über das im Stand der Technik übliche Deformationsverhalten zeigt.

### Beschreibung der Erfindung

Die Erfindung wird nachfolgend beispielhaft unter Bezugnahme auf die beigefügte Zeichnung beschrieben.
Figur 1 zeigt eine schematische Darstellung der beispielhaften Ausführungsform.
Figur 2 zeigt eine Seitenansicht des Aufprallabsorptionselement,
Figur 3 zeigt einen Querschnitt des Aufprallabsorptionselements.

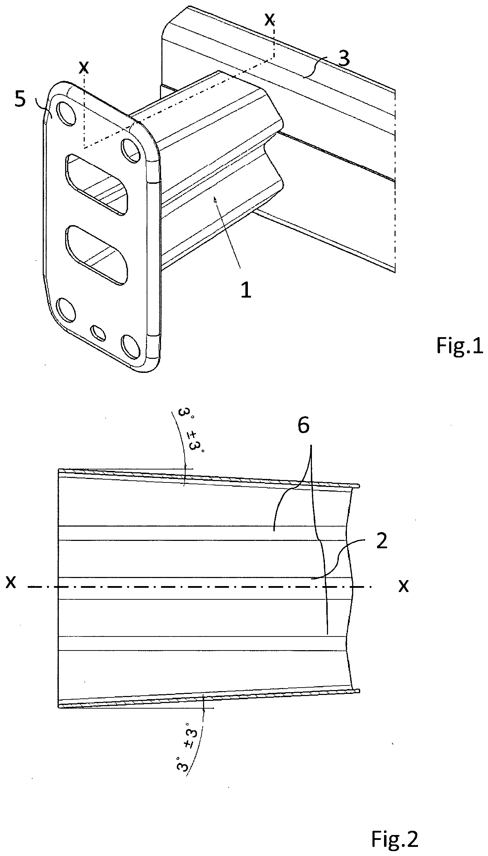

In Figur 1 ist der Einbauort des Aufprallabsorptionselementes dargestellt. Das Aufprallabsorptionselement 1 befindet sich zwischen einem Stoßquerträger 3 sowie einer Anschlussplatte 5. Die Anschlussplatte 5 dient als Flansch um das Absorptionselement an einem Fahrzeuglängsträger, der nicht dargestellt ist, zu befestigen.

In Figur 2 ist das Aufprallabsorptionselement in einem Seitenansicht entlang der Achse X - X dargestellt. Das Aufprallabsorptionselement 1 weist dabei in diesem Ausführungsbeispiel einen konisch zulaufenden Längsverlauf auf. In diesem Ausführungsbeispiel ist beispielhaft ein Winkel von 3° angegeben, mit dem das Bauteil sich in Richtung Stoßfänger konisch verjüngt. Die Verjüngung des Aufprallabsorptionselementes erfolgt dabei durch eine Reduzierung im äußeren Teilbereich des Elements. In der Zeichnung ist das der oberste sowie der untersten Teilbereich des Bauteils. Die skizziert angedeuteten Bereiche im Zentrum des Aufprallabsorptionselements verlaufen dagegen parallel.

Für eine Optimierung des Aufprallabsorptionselements wäre es auch möglich, weitere Teilbereiche des Bauteils konisch zulaufen zu lassen. Das bedeutet, dass die gesamten Bauhöhen und Baubreiten sowie die Ausgestaltung des Bauelements sich über die Längserstreckung ändern können. Auch ein verlauf, in dem nur eine Ebene entlang der Achse X-X konisch in Richtung Stoßfänger zuläuft, ist als Ausführungsform denkbar. Für die Ausführung der Erfindung ist der konische Verlauf allerdings nicht erforderlich.

Die im nachfolgend diskutierten Parameter sind beispielhafte Parameter, wie sie an einer Querschnittstelle des Bauteils ausgeführt sind. Im einfachsten Fall behält das Bauteil über seine gesamte Baulänge hinweg denselben Querschnitt bei.

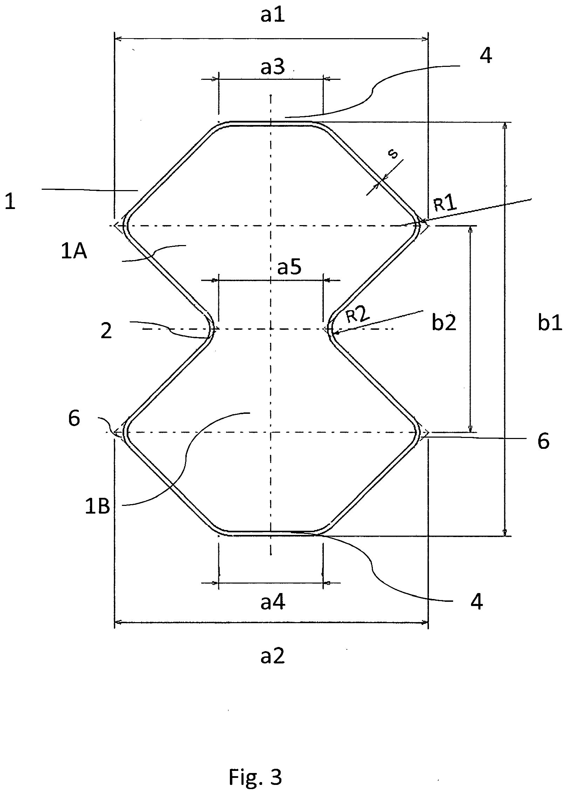

Eine für die Erfindung relevante Ausführungsform ist in Figur 3 dargestellt. Figur 3 zeigt den Querschnitt senkrecht zum Längsverlauf des Aufprallabsorptionselements. Man erkennt, dass es sich um ein Polygon mit zehn Flächen handelt. Die Kontur des 10-flächigen Polygons ist in Form von zwei Waben 1A und 1B aufgebaut, die an einer Einschnürung 2 miteinander in Kontakt stehen. Das Aufprallabsorptionselement weist eine Breite a1 auf sowie eine Bauhöhe b1 auf. Die Bauhöhe b1 ist dabei zum Erzielen der optimalen Energieaufnahme immer größer als a1.

In der gewählten Ausführungsform sind die beiden Waben 1A und 1B in der Größe gleich. Damit sind die Breiten a1 und a2 bis auf Toleranzen identisch. In diesem Beispiel sind auch die in der Zeichnung oben und unten angeordneten Stirnflächen 4, mit a3 und a4 bezeichnet, gleich. Die die Breite der Fläche a3 beträgt dabei in Relationen zu zur Gesamtbreite etwa ein Drittel 0,33 der Breite al, wobei eine Toleranz des 0,2-fachen der Breite a1 vorgesehen ist. Da das Ausführungsbeispiel symmetrisch aufgebaut ist, ist die Regel auch auf die Breite a4 anwendbar. Die lichte Breite a5 der Einschnürung 2 liegt in diesem Ausführungsbeispiel ebenfalls beim 0,33fachen der Breite a1 des gesamten Aufprallabsorptionselements. Die Toleranz für die lichte Breite a5 wird dabei mit plus/minus 0,1 mal der Gesamtbreite a1 gewählt.

Die Wabenspitzen 6 liegen in der Höhe im Abstand b2 voneinander. Der Abstand b2 wird über die Bauhöhe des Aufprallabsorptionselements definiert und beträgt in einer ersten Ausführungsform 0,5 der Bauhöhe b1 mit einer Toleranz von 0,2-mal der Bauhöhe b1. Die Position des Abstandes b2 relativ zur Bauhöhe b1 ist in diesem Ausführungsbeispiel symmetrisch gewählt.

Mit dem beschriebenen Ausführungsbeispiel ist ein optimales Aufprallabsorptionselement dargestellt das durch die Variation der Parameter a1 bis a5, sowie b1 und b2 an die Forderungen des jeweiligen Fahrzeugs angepasst werden kann. Die Dicke des Materials des Aufprallabsorptionselements ist mit s angegeben. Die Radien an den Wabenspitzen sowie an der Einschnürung werden ebenfalls an die Anforderungen des jeweiligen Fahrzeugs angepasst. Dabei sind die Radien, geht man von gebogenen Aluprofilen aus, auf einen Radius, der der Dicke s entspricht, beschränkt, können aber mit Radien bis zur zehnfachen Dicke s oder noch größeren Radien hergestellt werden.

Werden größere Radien verwendet, entstehen an den Wabenspitzen 6 plateauartige Strukturen, die aber nicht plan ausgeführt sind.

Im weiteren Ausführungsformen sind die beiden Waben 1A und 1B unterschiedlich dimensioniert.

Zur Herstellung des Aufprallabsorptionselements werden, wie im Stand der Technik bekannt, einzelne Aluminium-Teile, einteilig oder mehrteilig in geeigneter Weise miteinander verschweißt.

Das erfindungsgemäße Aufprallabsorptionselement lässt sich auch ohne Fügeprozess aus extrudierten Aluminiumsträngen herstellen. Mit diesem Herstellungsverfahren unterliegen die Wabenspitzen keiner Limitierung bezüglich der Radien mehr und können spitz zulaufend hergestellt werden.

### Bezugszeichenliste

1 Aufprallabsorptionselement
2 Einschnürung
3 Stoßfänger
4 Stirnfläche
5 Anschlussplatte
6 Wabenspitze
a1- a5 Breiten
b1 Höhe
b2 Abstand Wabenspitzen

## Patentansprüche

1. Aufprallabsorptionselement für einen Stoßfänger,
aus einem röhrenförmigen Körper zur Aufnahme der Aufprallenergie in einem Fahrzeug, wobei sich der röhrenförmige Körper zwischen einer Anschlussplatte (5) und einem Stoßquerträger (3) erstreckt,
wobei das Aufprallabsorptionselement einen doppelwabenförmigen Querschnitt aufweist und eine erste Wabe (1A) und eine zweite Wabe (1B) umfasst,
wobei die Waben (1A, 1B) an einer Einschnürung (2) miteinander in Kontakt stehen, wobei die Einschnürung (2) eine Breite (a5) aufweist,
wobei der doppelwabenförmige Querschnitt als 10-flächiges Polygon ausgebildet ist, wobei das 10-flächige Polygon eine Bauhöhe (b1) aufweist, und die erste Wabe (1A) und die zweite Wabe (1B) jeweils ein Paar Wabenspitzen (6) aufweisen,
wobei die erste Wabe (1A) eine obere Stirnfläche (4) aufweist und die zweite Wabe (1B) eine untere Stirnfläche (4) aufweist, wobei die obere Stirnfläche (4) und die untere Stirnfläche (4) eine Breite (a3, a4) aufweisen,
wobei die Wabenspitzen (6) der ersten Wabe (1A) und die Wabenspitzen (6) der zweiten Wabe (1B) jeweils gegenüberliegend angeordnet sind und eine Breite (a1, a2) vorgeben,
wobei zwischen einer Wabenspitze (6) der ersten Wabe (1A) und einer Wabenspitze (6) der zweiten Wabe (1B) ein Abstand (b2) vorgesehen ist, wobei jede der Wabenspitzen (6) auf der gleichen Seite der jeweiligen Wabe (1A, 1B) angeordnet ist und der Abstand (b2) gleich groß ist zu in etwa der halben Bauhöhe (b1) mit einer Toleranz von 0,2-mal der Bauhöhe (b1)
**dadurch gekennzeichnet, dass**
die Einschnürung (2) zwischen den beiden Waben (1A, 1B) eine lichte Weite von etwa einem Drittel der Breite (a1, a2) aufweist.

2. Aufprallabsorptionselement nach Anspruch 1, **dadurch gekennzeichnet, dass** die Breite (a1) der ersten Wabe (1A) und die Breite (a2) der zweiten Wabe (1B) gleich groß.

3. Aufprallabsorptionselement nach Anspruch 1 oder 2, **dadurch gekennzeichnet, dass** die Bauhöhe (b1) größer als die Breite (a1, a2) ist.

4. Aufprallabsorptionselement nach einem der vorhergehenden Ansprüche, **dadurch gekennzeichnet, dass** die Breite (a3) der oberen Stirnfläche (4) etwa ein Drittel der Breite (a1) aufweist, wobei eine Toleranz des 0,2-fachen der Breite (a1) vorgesehen ist, und die Breite (a4) der unteren Stirnfläche (4) etwa ein Drittel der Breite (a2) aufweist, wobei eine Toleranz des 0,2-fachen der Breite (a2) vorgesehen ist.

5. Aufprallabsorptionselement nach einem der vorhergehenden Ansprüche, **dadurch gekennzeichnet, dass** für die Breite (a5) der Einschnürung (2) zwischen den beiden Waben (1A, 1B) eine Toleranz mit plus/minus 0,1-mal der Breite (a1, a2) vorgesehen ist.

6. Aufprallabsorptionselement nach einem der vorhergehenden Ansprüche, **dadurch gekennzeichnet, dass** die Radien der Einschnürung (2) sowie der Wabenspitzen (6) mindesten der Dicke des Mantelmaterials (s) und bis zur zehnfachen Dicke des Mantelmaterials (s) des Aufprallabsorptionselements (1) entsprechen.

7. Aufprallabsorptionselement nach einem der vorhergehenden Ansprüche, **dadurch gekennzeichnet, dass** die Einschnürung (2) mit der Breite (a5) bis auf nahezu Null erfolgt.

8. Aufprallabsorptionselement nach einem der vorhergehenden Ansprüche, **dadurch gekennzeichnet, dass** das Aufprallabsorptionselement (1) einen über seine Baulänge mindestens teilweise konisch zulaufenden Querschnitt aufweist.

9. Aufprallabsorptionselement nach einem der vorhergehenden Ansprüche, **dadurch gekennzeichnet, dass** alle Flächen des 10-flächigen Polygonzuges einen konisch sich verjüngenden Verlauf aufweisen.

10. Aufprallabsorptionselement nach einem der vorhergehenden Ansprüche, **dadurch gekennzeichnet, dass** das Aufprallabsorptionselement (1) aus Aluminium hergestellt ist.

11. Aufprallabsorptionselement nach einem der Ansprüche 1 bis 9, **dadurch gekennzeichnet, dass** das Aufprallabsorptionselement (1) aus extrudiertem Aluminium hergestellt ist.

## Claims

1. Impact absorbing element for a bumper,
comprising a tubular body for absorbing the impact energy in a vehicle, the tubular body extending between a connection plate (5) and a bumper crossmember (3), the impact absorbing element having a double honeycomb-shaped cross section and comprising a first honeycomb (1A) and a second honeybomb (1B),
the honeycombs (1A, 1B) being in contact with one another at a constriction (2), the constriction (2) having a width (a5),
the double honeycomb-shaped cross section being configured as a 10-face polygon, the 10-face polygon having an overall height (b1), and the first honeycomb (1A) and the second honeycomb (1B) in each case having a pair of honeycomb points (6),
the first honeycomb (1A) having an upper end face (4) and the second honeycomb (1B) having a lower end face (4), the upper end face (4) and the lower end face (4) having a width (a3, a4),
the honeycomb points (6) of the first honeycomb (1A) and the honeycomb points (6) of the second honeycomb (1B) being arranged in each case so as to lie opposite one another and defining a width (a1, a2),
a spacing (b2) being provided between a honeycomb point (6) of the first honeycomb (1A) and a honeycomb point (6) of the second honeycomb (1B), each of the honeycomb points (6) being arranged on the same side of the respective honeycomb (1A, 1B), and the spacing (b2) being of equal magnitude to approximately half the overall height (b1) with a tolerance of 0.2 times the overall height (b1),
**characterized in that**
the constriction (2) between the two honeycombs (1A, 1B) has a clearance of approximately one third the width (a1, a2).

2. Impact absorbing element according to Claim 1, **characterized in that** the width (a1) of the first honeycomb (1A) and the width (a2) of the second honeycomb (1B) are equally large.

3. Impact absorbing element according to Claim 1 or 2, **characterized in that** the overall height (b1) is greater than the width (a1, a2).

4. Impact absorbing element according to one of the preceding claims, **characterized in that** the width (a3) of the upper end face (4) is approximately one third of the width (a1), a tolerance of 0.2 times the width (a1) being provided, and the width (a4) of the lower end face (4) is approximately one third of the width (a2), a tolerance of 0.2 times the width (a2) being provided.

5. Impact absorbing element according to one of the preceding claims, **characterized in that** a tolerance of ± 0.1 times the width (a1, a2) is provided for the width (a5) of the constriction (2) between the two honeycombs (1A, 1B).

6. Impact absorbing element according to one of the preceding claims, **characterized in that** the radii of the constriction (2) and of the honeycomb points (6) correspond at least to the thickness of the shell material (s) and up to ten times the thickness of the shell material (s) of the impact absorbing element (1).

7. Impact absorbing element according to one of the preceding claims, **characterized in that** the constriction (2) having the width (a5) is effected down to virtually zero.

8. Impact absorbing element according to one of the preceding claims, **characterized in that** the impact absorbing element (1) has a cross section which tapers conically at least partially over its overall length.

9. Impact absorbing element according to one of the preceding claims, **characterized in that** all the faces of the 10-face polygonal line have a conically tapering profile.

10. Impact absorbing element according to one of the preceding claims, **characterized in that** the impact absorbing element (1) is produced from aluminium.

11. Impact absorbing element according to one of Claims 1 to 9, **characterized in that** the impact absorbing element (1) is produced from extruded aluminium.

## Revendications

1. Élément d'absorption d'impact pour un pare-chocs, formé à partir d'un corps de forme tubulaire pour encaisser l'énergie d'impact dans un véhicule, dans lequel le corps de forme tubulaire s'étend entre une plaque de raccordement (5) et une traverse de pare-chocs (3),
dans lequel l'élément d'absorption d'impact présent une section transversale en forme de double nid-d'abeilles et inclut un premier nid-d'abeilles (1A) et un second nid-d'abeilles (1B),
dans lequel les nid-d'abeilles (1A,B) sont en contact l'un avec l'autre au niveau d'un rétrécissement (2), ledit rétrécissement (2) présentant une largeur (a5),
dans lequel la section transversale en forme de double nid-d'abeilles est réalisée sous forme de polygones à 10 côtés, ledit polygone à 10 côtés présentant une hauteur structurelle (b1), et le premier nid-d'abeilles (A) et le second nid-d'abeilles (1B) comportent chacun une paire de pointes de nid-d'abeilles (6),
dans lequel le premier nid-d'abeilles (1A) présente une surface frontale supérieure (4) et le second nid-d'abeilles (1B) présente une surface frontale inférieure (4), ladite surface frontale supérieure (4) et ladite surface frontale inférieure (4) présentant une largeur (a3, a4),
dans lequel les pointes de nid-d'abeilles (6) du premier nid-d'abeilles (1A) et les pointes de nid-d'abeilles (6) du second nid-d'abeilles (1B) sont agencées respectivement en opposition mutuelle et imposent une largeur (a1, a2),
dans lequel il est prévu une distance (b2) entre une pointe de nid-d'abeilles (6) du premier nid-d'abeilles (1A) et une pointe de nid-d'abeilles (6) du second nid-d'abeilles (1B), et chacune des pointes de nid-d'abeilles (6) est agencée sur le même côté du nid-d'abeilles (1A, 1B) respectif, et la distance (b2) est égale approximativement à la moitié de la hauteur structurelle (b1), avec une tolérance de 0,2 fois la hauteur structurelle (b1)
**caractérisé en ce que**
le rétrécissement (2) entre les deux nid-d'abeilles (1A, 1B) présente une largeur libre d'environ un tiers de la largeur (a1, a2).

2. Élément d'absorption d'impact selon la revendication 1, **caractérisé en ce que** la largeur (a1) du premier nid-d'abeilles (1A) et la largeur (a2) du second nid-d'abeilles (1B) sont égales.

3. Élément d'absorption d'impact selon la revendication 1 ou 2, **caractérisé en ce que** la hauteur structurelle (b1) est supérieure à la largeur (a1, a2).

4. Élément d'absorption d'impact selon l'une des revendications précédentes, **caractérisé en ce que** la largeur (a3) de la surface frontale supérieure (4) est approximativement un tiers de la largeur (a1) et il est prévu une tolérance de 0,2 fois la largeur (a1), et la largeur (a4) de la surface frontale inférieure (4) est approximativement un tiers de la largeur (a2) et il est prévu une tolérance de 0,2 fois la largeur (a2).

5. Élément d'absorption d'impact selon l'une des revendications précédentes, **caractérisé en ce que** pour la largeur (a5) du rétrécissement (2) entre les deux nid-d'abeilles (1A, 1B) il est prévu une tolérance avec plus/moins 0,1 fois la largeur (a1, a2).

6. Élément d'absorption d'impact selon l'une des revendications précédentes, **caractérisé en ce que** les rayons du rétrécissement (2) ainsi que des pointes de nid-d'abeilles (6) correspondent au moins à l'épaisseur du matériau enveloppe (s) et vont jusqu'à 10 fois l'épaisseur du matériau d'enveloppe (s) de l'élément d'absorption d'impact (1).

7. Élément d'absorption d'impact selon l'une des revendications précédentes, **caractérisé en ce que** le rétrécissement (2) avec la largeur (a5) a lieu pratiquement jusqu'à zéro.

8. Élément d'absorption d'impact selon l'une des revendications précédentes, **caractérisé en ce que** l'élément d'absorption d'impact (1) présente une section transversale qui converge au moins partiellement de manière conique sur sa longueur structurelle.

9. Élément d'absorption d'impact selon l'une des revendications précédentes, **caractérisé en ce que** toutes les surfaces de la structure polygonale présentent un tracé qui va en se rétrécissant de manière conique.

10. Élément d'absorption d'impact selon l'une des revendications précédentes, **caractérisé en ce que** l'élément d'absorption d'impact (1) est fabriqué en aluminium.

11. Élément d'absorption d'impact selon l'une des revendications 1 à 9, **caractérisé en ce que** l'élément d'absorption d'impact (1) est fabriqué en aluminium extrudé.
